# EUROPÄISCHE PATENTSCHRIFT

(11) **EP 3 643 561 B1**
(45) Veröffentlichungstag und Bekanntmachung des Hinweises auf die Patenterteilung: **24.11.2021**
(21) Anmeldenummer: 19203556.6
(22) Anmeldetag: 16.10.2019
(51) Int. Cl.: B60N 2/50, B60N 2/52

(54) **FAHRZEUGSITZ MIT EINER RESTFEDERWEGSTEUERUNG**
VEHICLE SEAT WITH CONTROL OF RESIDUAL SPRING PATH
SIÈGE DE VÉHICULE DOTÉ D'UNE COMMANDE DE COURSE DE RESSORT RÉSIDUELLE

(30) Priorität: 23.10.2018 DE 102018126404
(43) Veröffentlichungstag der Anmeldung: 29.04.2020
(73) Patentinhaber: GRAMMER AG, 92289 Ursensollen (DE)
(72) Erfinder: Fillep, Johannes, 92262 Birgland (DE); Schanderl, Florian, 92521 Schwarzenfeld (DE)
(74) Vertreter: Hannke, Christian

(56) Entgegenhaltungen:
- DE-A1-102007 012 399
- DE-A1-102008 005 829

## Beschreibung

Die vorliegende Erfindung betrifft einen Fahrzeugsitz mit einer Restfederwegsteuerung und einer Luftfeder, wobei die Restfederwegsteuerung und die Luftfeder jeweils ein erstes Ende, welches mit einer ersten Verbindungsschwinge des Fahrzeugsitzes verbunden ist, und jeweils ein zweites Ende, welches mit einer zweiten Verbindungsschwinge des Fahrzeugsitzes verbunden ist, aufweisen, und die Restfederwegsteuerung ein Kolbenelement, welches mit dem ersten Ende der Restfederwegsteuerung verbunden ist, und ein Stangenelement, welches mit dem zweiten Ende der Restfederwegsteuerung verbunden ist, umfasst.

Aus dem Stand der Technik sind Restfederwegverstellungen derart bekannt, dass die Feder bzw. der Dämpfer, welcher im Regelfall einerseits mit einem schwingenden Element und einem nicht-schwingendem Element des Fahrzeugsitzes verbunden ist, mittels einer fluidischen Verstellung innerhalb des jeweiligen Elements eingestellt wird. Beispielsweise bei einem Dämpfer wird durch eine Druckveränderung in der Arbeitskammer der Kolben entsprechend weiter heraus gefahren oder hinein gefahren.

Derartige Restfederwegverstellungen sind jedoch kompliziert ausgebildet und greifen auch in die Funktionsweise von anderen Parametern mit ein, beispielsweise die Dämpfung bzw. Federung oder die Höhennivellierung.

DE 10 2007 012399 A1 offenbart eine Höheneinstellvorrichtung umfassend Steuerverbindungsglieder, die auf einem Steuerwagen angeordnet sind, der sich linear in Richtung einer linearen Schaltbewegung bewegt. Der Steuerwagen kann eine Komponente einer Lineareinheit mit einem Führungskörper mit einer Längsverlängerung sein.

Aufgabe der vorliegenden Anmeldung ist es daher, einen Fahrzeugsitz mit einer Restfederwegverstelleinrichtung bereitzustellen, mittels welcher besonders einfach eine Sitzhöhe des Fahrzeugsitzes angepasst werden kann.

Kerngedanke der vorliegenden Anmeldung ist es daher, einen Fahrzeugsitz mit einer Restfederwegsteuerung und einer Luftfeder bereitzustellen, wobei die Restfederwegsteuerung und die Luftfeder jeweils ein erstes Ende, welches mit einer ersten Verbindungsschwinge des Fahrzeugsitzes verbunden ist, und jeweils ein zweites Ende, welches mit einer zweiten Verbindungsschwinge des Fahrzeugsitzes verbunden ist, aufweisen, und die Restfederwegsteuerung ein Kolbenelement, welches mit dem ersten Ende der Restfederwegsteuerung verbunden ist, und ein Stangenelement, welches mit dem zweiten Ende der Restfederwegsteuerung verbunden ist, umfasst, wobei das Kolbenelement mittels einer Dreh- und/oder Schiebebewegung gegenüber dem Stangenelement mit einem Ventilelement oder einem Schalterelement in Kontakt bringbar ist, um eine Luftmenge der Luftfeder einzustellen.

Es ist dabei denkbar, dass die erste Verbindungsschwinge und die zweite Verbindungsschwinge ein Scherengestell ausbilden, also entsprechend kreuzend angeordnet sind und um eine gemeinsame Drehachse drehbar sind. Alternativ ist es denkbar, dass die Verbindungsschwingen derart angeordnet sind, so dass eine Parallelogrammführung möglich ist.

Durch die Veränderung der Luftmenge der Luftfeder kann dabei die Sitzhöhe des Fahrzeugsitzes eingestellt werden, um den Fahrzeugsitz an die Bedürfnisse einer Person, welche auf dem Fahrzeugsitz Platz genommen hat, anpassen zu können.

Insbesondere kann das Kolbenelement drehbar um eine erste Drehachse mit dem ersten Ende der Restfederwegsteuerung verbunden sein.

Weiter bevorzugt kann das Stangenelement unbeweglich mit dem zweiten Ende der Restfederwegsteuerung verbunden sein.

Erfindungsgemäß ist dabei das Kolbenelement gegenüber dem Stangenelement drehbar und verschiebbar. Das bedeutet auch, dass durch eine Bewegung des Kolbenelements in Richtung der Erstreckung des Stangenelements der Abstand des ersten Endes der Restfederwegsteuerung zu dem zweiten Ende der Restfederwegsteuerung verändert werden kann.

Je nach Stellung des Kolbenelements in Richtung des Stangenelements sowie je nach Drehstellung des Kolbenelements gegenüber dem Stangenelement kann das Kolbenelement mit dem Ventilelement oder dem Schalterelement in Kontakt gebracht werden.

Besonders bevorzugt ist das Ventilelement und das Schalterelement mit dem zweiten Ende der Restfederwegsteuerung verbunden, das heißt, dass sich das Kolbenelement relativ zu dem Ventilelement sowie dem Schalterelement bewegt.

Gemäß einer besonders bevorzugten Ausführungsform ist das Schalterelement zur Ansteuerung einer Luftfördereinheit zum Fördern von Luft in die Luftfeder ausgebildet und vorgesehen, und das Ventilelement ausgebildet und vorgesehen, um Luft aus der Luftfeder entweichen zu lassen.

Das Ventilelement ist dabei besonders bevorzugt mit der Luftfeder fluidisch verbunden.

Erfindungsgemäß umfasst das Kolbenelement einen ersten Funktionsbereich und einen zweiten Funktionsbereich, wobei in Abhängigkeit von einer Drehstellung und einer Längsstellung des Kolbenelements relativ zum Stangenelement der erste Funktionsbereich mit dem Schalterelement und der zweite Funktionsbereich mit dem Ventilelement in Kontakt bringbar ist.

Der erste Funktionsbereich und der zweite Funktionsbereich sind auf dem Kolbenelement derart angeordnet, dass entweder das Schalterelement oder das Ventilelement kontaktierbar ist; eine Kontaktierung des Schalterelements und des Ventilelements ist nicht vorgesehen, da eine gleichzeitige Zuführung und Abfuhr von Luft der Luftfeder nicht sinnvoll ist.

Gemäß einer weiteren bevorzugten Ausführungsform sind eine erste Rastklinke und eine zweite Rastklinke an dem zweiten Ende der Restfederwegsteuerung angeordnet, wobei der erste Funktionsbereich mittels der ersten Rastklinke und der zweite Funktionsbereich mittels der zweiten Rastklinke hinsichtlich einer Drehung des Kolbenelements arretierbar ist.

Besonders bevorzugt ist bei einer Arretierung des ersten Funktionsbereichs mittels der ersten Rastklinke auch der erste Funktionsbereich in Kontakt mit dem Schalterelement. Ebenso besonders bevorzugt ist bei einer Arretierung des zweiten Funktionsbereichs mittels der zweiten Rastklinke der zweite Funktionsbereich in Kontakt mit dem Schalterelement.

Insbesondere ist eine Arretierung des Kolbenelements hinsichtlich der Drehbewegung insbesondere dann vorteilhaft, um den Fahrzeugsitz in eine bestimmte Position bzw. Stellung des Fahrzeugsitzes zu fahren.

Besonders bevorzugt ist dem Fahrzeugsitz in Abhängigkeit von der Beschaffenheit der Luftfeder ein Federweg zugeordnet. Beispielsweise beträgt dieser Federweg insgesamt 180 mm, wobei ein Minimalfederweg von 50 mm vorgesehen ist. Dieser Minimalfederweg entspricht dem Restfederweg, jeweils in Richtung nach unten und in Richtung nach oben. Zwischen den Restfederwegen von 50 mm ist ein Normalbereich vorgesehen, welcher dazu verwendet werden kann, die Sitzhöhe entsprechend den Anforderungen der Person einstellen zu können. Im vorliegenden Beispiel beträgt der Normalbereich 80 mm.

Gemäß einer besonders bevorzugten Ausführungsform sind ein unterer Restfederwegbereich und ein oberer Restfederwegbereich sowie ein zwischen dem unteren und dem oberen Restfederwegbereich angeordneter Normalbereich des Fahrzeugsitzes vorgesehen, wobei wenn sich der Fahrzeugsitz in dem unteren Restfederwegbereich befindet, mittels einer Drehung des Kolbenelements der erste Funktionsbereich mit dem Schalterelement in Kontakt steht, und wenn sich der Fahrzeugsitz in dem oberen Restfederwegbereich befindet, mittels einer Drehung des Kolbenelements der zweite Funktionsbereich mit dem Ventilelement in Kontakt bringbar ist.

Der Restfederwegbereich bedeutet, dass die Sitzhöhe des Fahrzeugsitzes in dem unteren minimalen Federweg von bis 50 mm oder in dem oberen minimalen Federweg von 130 mm bis 180 mm liegt.

Wenn sich die Person auf dem Fahrzeugsitz niederlässt, so kann die Person die Restfederwegsteuerung kurz betätigen, was einer Drehung des Kolbenelements entspricht. Falls die Sitzhöhe des Fahrzeugsitzes in einem der Restfederwege liegt, so wird durch die Ausgestaltung des Kolbenelements das Kolbenelement mittels der jeweiligen Rastklinke arretiert und die Sitzhöhe durch Kontaktierung des Schalterelements oder des Ventilelements automatisch verändert hin zu dem Normalbereich. Erreicht die Sitzhöhe den Normalbereich, so wird durch die Längsverschiebung des Kolbenelements die Arretierung durch die entsprechende Rastklinke gelöst, so dass das Kolbenelement sich wieder in eine Null-Stellung zurückbewegt. Null-Stellung bedeutet, dass weder das Ventilelement noch das Schalterelement kontaktiert wird. Die Rückstellung des Kolbenelements wird im Nachfolgenden noch genauer dargestellt.

Gemäß einer besonders bevorzugten Ausführungsform ist ein Betätigungselement zum Betätigen der Restfederwegsteuerung vorgesehen, wobei ein erster Bowdenzug und ein zweiter Bowdenzug mit dem Betätigungselement einerseits und mit dem Kolbenelement andererseits verbunden sind.

Besonders bevorzugt überträgt bei einer Betätigung des Betätigungselements in eine erste Richtung der erste Bowdenzug einen Zug auf das Kolbenelement, um das Kolbenelement nach rechts oder nach links zu drehen, wobei bei einer Betätigung des Betätigungselements in eine zweite Richtung der zweite Bowdenzug einen Zug auf das Kolbenelement überträgt, um das Kolbenelement in die entsprechende andere Richtung nach links oder rechts zu drehen.

Es ist also beispielsweise vorgesehen, dass durch Betätigung des Betätigungselements nach oben, was einer Sitzhöhenerhöhung entspricht, das Kolbenelement nach rechts gedreht wird. Bei einer Betätigung des Betätigungselements nach unten, was entsprechend einer Sitzhöhenerniedrigung entspricht, wird das Kolbenelement in die entsprechende andere Richtung, also nach links, gedreht. Die umgekehrten Richtungen sind ebenso möglich.

Eine Übertragung eines Zugs auf das Kolbenelement durch den entsprechenden Bowdenzug bedeutet hierbei, dass durch Betätigung des Betätigungselements der Bowdenzug eine Zugkraft auf das Kolbenelement überträgt, wodurch das Kolbenelement eine Drehung erfährt.

Gemäß einer weiteren besonders bevorzugten Ausführungsform umfasst das Betätigungselement eine Rückstellfeder, um das Betätigungselement nach einer Betätigung in eine Null-Stellung des Betätigungselements zurückzustellen.

Die Null-Stellung bedeutet insbesondere, dass keine Kraft auf die Rückstellfeder einwirkt, welche eine Rückstellkraft der Rückstellfeder bewirken würde. Das bedeutet ebenso, dass das Betätigungselement nicht betätigt wird, so dass keine Zugkraftübertragung durch einen der Bowdenzüge auf das Kolbenelement vorgesehen ist.

Besonders bevorzugt ist die Rückstellfeder als eine Schenkelfeder ausgebildet. Weiter bevorzugt ist die Schenkelfeder derart ausgebildet, dass in der Null-Stellung die Schenkel der Schenkelfeder parallel zueinander verlaufen.

Gemäß einer weiteren bevorzugten Ausführungsform umfasst der erste Funktionsbereich einen ersten Funktionsbereichsabschnitt und einen zweiten Funktionsbereichsabschnitt, wobei der erste Funktionsbereichsabschnitt mit dem Schalterelement und der zweite Funktionsbereichsabschnitt mit der zweiten Rastklinke in Kontakt bringbar ist.

Hierdurch ist eine möglichst definierte Kontaktierung des Kolbenelements mit dem Schalterelement bzw. der zweiten Rastklinke gut möglich.

Weiter vorteilhaft erstrecken sich der erste Funktionsbereichsabschnitt und der zweite Funktionsbereichsabschnitt in Erstreckungsrichtung des Kolbenelements bzw. des Stangenelements. Weiter vorteilhaft ist eine Erstreckungslänge des ersten Funktionsbereichsabschnitts kleiner als die Erstreckungslänge des zweiten Funktionsbereichsabschnitts.

Durch die unterschiedlichen Erstreckungslängen der Funktionsbereichsabschnitte ist eine gute Ansteuerung des Schalterelements sowie ein gutes Arretieren durch die Rastklinke und eine entsprechende Restfederwegansteuerung möglich, insbesondere dann, wenn die Längen der Funktionsbereichsabschnitte an die Restfederwege und den Normalbereich angepasst sind.

Gemäß einer weiteren bevorzugten Ausführungsform weist der zweite Funktionsbereich einen ersten Funktionsbereichsabschnitt und einen zweiten Funktionsbereichsabschnitt auf, wobei der erste Funktionsbereichsabschnitt mit dem Ventilelement und der zweite Funktionsbereichsabschnitt mit der ersten Rastklinke in Kontakt bringbar ist.

Hierdurch ist eine möglichst definierte Kontaktierung des Kolbenelements mit dem Ventilelement bzw. der ersten Rastklinke gut möglich.

Weiter vorteilhaft erstrecken sich der erste Funktionsbereichsabschnitt und der zweite Funktionsbereichsabschnitt des zweiten Funktionsbereichs in Erstreckungsrichtung des Kolbenelements bzw. des Stangenelements. Weiter vorteilhaft ist eine Erstreckungslänge des ersten Funktionsbereichsabschnitts kleiner als die Erstreckungslänge des zweiten Funktionsbereichsabschnitts.

Durch die unterschiedlichen Erstreckungslängen der Funktionsbereichsabschnitte ist eine gute Ansteuerung des Ventilelements sowie ein gutes Arretieren durch die Rastklinke und eine entsprechende Restfederwegansteuerung möglich, insbesondere dann, wenn die Längen der Funktionsbereichsabschnitte an die Restfederwege und den Normalbereich angepasst sind. Gemäß einer weiteren bevorzugten Ausführungsform sind die erste Rastklinke und die zweite Rastklinke in der Erstreckungsrichtung des Stangenelements gesehen in einem ersten Abstand voneinander beabstandet. Durch eine Beabstandung der Rastklinken zueinander kann das Kolbenelement besonders übersichtlich hinsichtlich der Funktionsbereiche ausgebildet werden, und das Schalterelement und das Ventilelement in der Nähe der jeweiligen Rastklinke angeordnet werden.

Besonders vorteilhaft weisen der erste Funktionsbereichsabschnitt des ersten Funktionsbereichs eine erste Länge und der zweite Funktionsbereichsabschnitt des ersten Funktionsbereichs eine zweite Länge auf, in der Erstreckungsrichtung des Kolbenelements bzw. des Stangenelements gesehen.

Ebenso vorteilhaft weisen der erste Funktionsbereichsabschnitt des zweiten Funktionsbereichs eine erste Länge und der zweite Funktionsbereichsabschnitt des zweiten Funktionsbereichs eine zweite Länge auf, in der Erstreckungsrichtung des Kolbenelements bzw. des Stangenelements gesehen.

Die zugrunde liegende Aufgabe wird auch gelöst von einem Verfahren zum Betreiben des Fahrzeugsitzes mit einer Restfederwegsteuerung, umfassend die Verfahrensschritte:
a) Betätigung der Restfederwegsteuerung;
b) Abhängig von einer Stellung des Kolbenelements zu dem Stangenelement:
   b1) Ausfahren der Restfederwegsteuerung aus einem unteren Restfederwegbereich in einen Normalbereich;
   b2) Ausfahren der Restfederwegsteuerung aus einem oberen Restfederwegbereich in einen Normalbereich;
   b3) Einstellung einer Höhe des Fahrzeugsitzes in dem Normalbereich.

Vor dem Verfahrensschritt a) ist es auch vorteilhaft, wenn sich eine Person auf dem Fahrzeugsitz niederlässt, also eine Belegung des Fahrzeugsitzes stattfindet. Abhängig von der Größe und dem Gewicht kann es sein, dass die Person eine andere Sitzhöhe als die zuvor eingestellte wünscht und wird daher die Restfederwegsteuerung betätigen.

Eine Betätigung der Restfederwegsteuerung, beispielsweise über das Betätigungselement, führt zu einer Drehung des Kolbenelements, wodurch abhängig von der Stellung des Kolbenelements zu dem Stangenelement verschiedene Möglichkeiten zum weiteren Verfahren möglich sind.

Befindet sich der Fahrzeugsitz in dem unteren Restfederwegbereich, das heißt, dass der mögliche Federweg nach unten kleiner als beispielsweise 50 mm ist, so arretiert aufgrund der Drehung des Kolbenelements aufgrund der Betätigung der erste Funktionsbereich mit der zweiten Rastklinke und steht mit dem Schalterelement in Kontakt, so dass Luft in die Luftfeder gefördert werden kann. Hierdurch wird die Restfederwegsteuerung ausgefahren, das heißt, dass das Kolbenelement gegenüber dem Stangenelement in Erstreckungsrichtung verlagert wird. Das Kolbenelement wird dabei solange ausgefahren, solange eine Arretierung in Drehrichtung mit der zweiten Rastklinke vorhanden ist. Durch die Ausfahrbewegung wird der zweite Funktionsbereichsabschnitt des ersten Funktionsbereichs solange durch die zweite Rastklinke arretiert, bis die Länge des Funktionsbereichs abgefahren worden ist.

Befindet sich der Fahrzeugsitz in dem oberen Restfederwegbereich, das heißt, dass der mögliche Federweg nach oben kleiner als beispielsweise 50 mm ist, so arretiert das Kolbenelement aufgrund der Drehung des Kolbenelements aufgrund der Betätigung der zweite Funktionsbereich mit der ersten Rastklinke und steht mit dem Ventilelement in Kontakt, so dass Luft aus der Luftfeder abgelassen werden kann. Hierdurch wird die Restfederwegsteuerung ausgefahren, das heißt, dass das Kolbenelement gegenüber dem Stangenelement in Erstreckungsrichtung verlagert wird, und zwar in die andere Richtung als bei dem unteren Restfederwegbereich. Das Kolbenelement wird dabei solange ausgefahren, solange eine Arretierung in Drehrichtung mit der ersten Rastklinke vorhanden ist. Durch die Ausfahrbewegung wird der zweite Funktionsbereichsabschnitt des zweiten Funktionsbereichs solange durch die erste Rastklinke arretiert, bis die Länge des Funktionsbereichs abgefahren worden ist.

Nach Abfahren des entsprechend Funktionsbereichsabschnitts und dem Lösen der Arretierung mit der entsprechenden Rastklinke befindet sich der Fahrzeugsitz in dem Normalbereich.

Befindet sich der Fahrzeugsitz in dem Normalbereich, so kann durch die Betätigung der Restfederwegsteuerung die Sitzhöhe des Fahrzeugsitzes eingestellt werden, solange bis die Sitzhöhe des Fahrzeugsitzes in den unteren oder oberen Restfederwegbereich eintritt.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den entsprechenden Zeichnungen zu entnehmen. Hierbei zeigen:
- Fig. 1: Fahrzeugsitz mit Restfederwegsteuerung;
- Fig. 2A: Explosionsdarstellung der Restfederwegsteuerung gemäß einer Ausführungsform;
- Fig. 2B: zusammengebaute Darstellung der Restfederwegsteuerung gemäß Figur 2A;
- Fig. 3A: perspektivische Darstellung des Kolbenelements;
- Fig. 3B: weitere perspektivische Darstellung des Kolbenelements;
- Fig. 4A: Seitenansicht der Restfederwegsteuerung;
- Fig. 4B: Schnitt der Restfederwegsteuerung;
- Fig. 4C: weiterer Schnitt der Restfederwegsteuerung;
- Fig. 4D: Draufsicht der Restfederwegsteuerung;
- Fig. 4E: weiterer Schnitt der Restfederwegsteuerung;
- Fig. 5A: Restfederwegsteuerung im unteren Restfederwegbereich;
- Fig. 5B: Schnitt der Restfederwegsteuerung gemäß Fig. 5A;
- Fig. 5C: weiterer Schnitt der Restfederwegsteuerung gemäß Fig. 5A;
- Fig. 6A: Restfederwegsteuerung im Normalbereich;
- Fig. 6B: Schnitt der Restfederwegsteuerung gemäß Fig. 6A;
- Fig. 6C: weiterer Schnitt der Restfederwegsteuerung gemäß Fig. 6A;
- Fig. 7A: Restfederwegsteuerung im Normalbereich;
- Fig. 7B: Schnitt der Restfederwegsteuerung gemäß Fig. 7A;
- Fig. 8A: Restfederwegsteuerung im oberen Restfederwegbereich;
- Fig. 8B: Schnitt der Restfederwegsteuerung gemäß Fig. 8A;
- Fig. 9: Funktionsschema;
- Fig. 10A: perspektivische Ansicht eines Betätigungselements gemäß einer Ausführungsform;
- Fig. 10B: Vorderansicht des Betätigungselements gemäß Figur 10A;
- Fig. 10C: Schnitt des Betätigungselements gemäß Figur 10B;
- Fig. 10D: Draufsicht des Betätigungselements gemäß Figur 10A;
- Fig. 10E: Schnitt des Betätigungselements gemäß Figur 10D.

In den Figuren werden gleiche Bauelemente mit den gleichen Bezugszeichen bezeichnet, wobei in manchen Figuren die Bezugszeichen zur besseren Übersichtlichkeit weggelassen werden können.

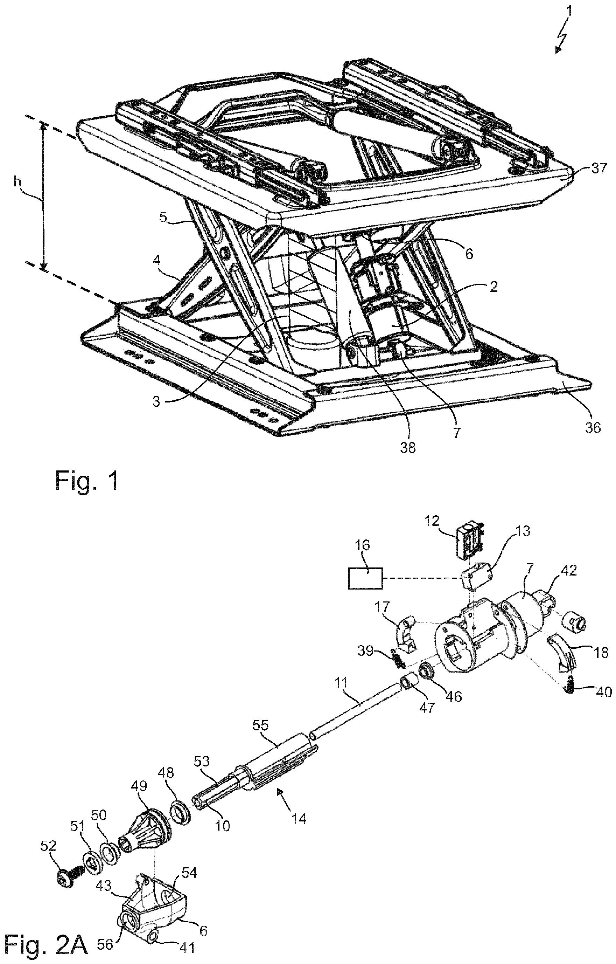

In der Figur 1 ist ein Fahrzeugsitz 1, zumindest in Teilen, gezeigt mit einer Restfederwegsteuerung 2. Dabei ist ein Unterteil 36 und ein Oberteil 37 vorgesehen, welche mittels einer ersten Verbindungsschwinge 4 und einer zweiten Verbindungsschwinge 5 miteinander verbunden sind. Ein erstes Ende 6 der Restfederwegsteuerung 2 ist dabei mit der ersten Verbindungsschwinge 4 und ein zweites Ende 7 der Restfederwegsteuerung 2 mit der zweiten Verbindungsschwinge 5 verbunden.

Weiter ist vorzugsweise ein Dämpfer 38 zum Dämpfen von Bewegungen des Oberteils 37 relativ zum Unterteil 36 vorgesehen, welcher ebenso mit der ersten Verbindungsschwinge 4 und der zweiten Verbindungsschwinge 5 verbunden ist. Der Dämpfer 38 und die Restfederwegsteuerung 2 sind parallel zueinander angeordnet.

Ebenso ist eine Luftfeder 3 vorgesehen, um eine Sitzhöhe h zu verändern. Die Sitzhöhe h kann beispielsweise definiert werden durch den Abstand des Oberteils 37 zu dem Unterteil 36.

Eine Steuerung einer Luftmenge der Luftfeder 3 wird dabei durch die Restfederwegsteuerung 2 vorgenommen, wobei die Luftmenge entweder erhöht oder verringert werden kann.

Die Ausgestaltung der Restfederwegsteuerung 2 und deren Funktionsweise wird anhand der weiteren Figuren noch genauer dargestellt.

Die Figur 2A zeigt eine Restfederwegsteuerung 2 gemäß einer besonders bevorzugten Ausführungsform und in einer Explosionsdarstellung.

Wie zu erkennen ist, weist die Restfederwegsteuerung 2 ein erstes Ende 6 und ein zweites Ende 7 auf, wobei ein Stangenelement 11 mit dem zweiten Ende 7 unbeweglich verbunden ist. Weiter ist ein Kolbenelement 10 vorgesehen, welches gegenüber dem Stangenelement drehbar und verschiebbar gelagert ist, wobei das Kolbenelement 10 mit dem ersten Ende 6 der Restfederwegsteuerung 2 drehbar verbunden ist. Insbesondere weist das Kolbenelement 10 ein Wellenteil 53 auf, welches durch eine erste Öffnung 54 des ersten Endes 6 hindurcherstreckt und mit einem Drehkörper 49 starr verbunden ist. Weiter ist ein Funktionskörperteil 55 des Kolbenelements 10 vorgesehen, welches sich an dem Wellenteil 53 anschließt und welches den ersten Funktionsbereich 14 und den zweiten Funktionsbereich 15 aufweist, wobei in der Figur 2A lediglich der erste Funktionsbereich 14 gezeigt ist. Damit Verkantungen des Funktionskörperteils 55 mit dem ersten Ende 6 der Restfederwegsteuerung 2 verhindert werden können, ist eine zweite Gleitbuchse 48 vorgesehen, welches das Wellenteil 53 umschließt, mit dem Funktionskörperteil 55 und der ersten Öffnung 54 in Kontakt steht. Der Drehkörper 49 ist in einer Aufnahme 43 des ersten Endes 6 der Restfederwegsteuerung 2 eingebracht.

Weiter ist eine dritte Gleitbuchse 50 vorgesehen, welches mit dem Drehkörper 49 verbindbar ist und ebenso innerhalb der Aufnahme 43 angeordnet ist. Darüber hinaus ist ein viertes Abstandselement 51 vorgesehen, welches außerhalb der Aufnahme 43 angeordnet ist und mit einer Schraube 52 in Kontakt steht. Die Schraube wird zur Drehfixierung des Drehkörpers 49 durch eine zweite Öffnung 56 der Aufnahme 43 erstreckend angeordnet und mit dem Drehkörper 49 verbunden.

Ebenso weist das erste Ende 6 der Restfederwegsteuerung 2 ein erstes Befestigungsohr 41 auf, mittels welcher das erste Ende 6 mit der ersten Verbindungsschwinge 4 verbunden ist.

Demgegenüber ist eine Gleitbuchse 46, vorzugsweise mit Bund ausgestaltet, vorgesehen, mittels welchem der Verschleiß bei translatorischen und/oder rotatorischen Bewegungen verringert werden kann. Besonders bevorzugt ist das Stangenelement 11 fest in das zweite Ende 7 eingepresst. Darüber hinaus ist eine erste Gleitbuchse 47 zu erkennen, welches das Stangenelement 11 umschließt und die Bewegung des Kolbenelements 10 gegenüber dem Stangenelement 11 in Erstreckungsrichtung des Stangenelements 11 begrenzt.

Insbesondere weisen die Gleitbuchsen 46, 48, 50 ebenso einen Bund auf und dienen der Verschleißreduzierung bei translatorischen und/oder rotatorischen Bewegungen.

Mit dem zweiten Ende 7 sind eine erste Rastklinke 17 und eine zweite Rastklinke 18 insbesondere drehbar verbunden, welche zum Arretieren des Kolbenelements 10 vorgesehen sind. Die genaue Funktionsweise wird in den weiteren Figuren genauer dargestellt. Die erste Rastklinke 17 ist um eine erste Drehachse 44 und die zweite Rastklinke 18 um eine zweite Drehachse 45 drehbar mit dem zweiten Ende 7 verbunden.

Mit dem zweiten Ende 7 sind ebenso ein Ventilelement 12 und ein Mikroschalter 13 verbunden, wobei der Mikroschalter 13 zur Ansteuerung einer Luftfördereinheit 16 verbunden ist. Bei Aktivierung des Mikroschalters 13 wird ein Signal zu der Luftfördereinheit 16 gesendet, um die Luftmenge der Luftfeder 3 zu erhöhen. Die Luftfördereinheit 16 steht in fluidischem Kontakt mit der Luftfeder 3.

Es ist auch ein zweites Befestigungsohr 42 an dem zweiten Ende 7 der Restfederwegsteuerung 2 vorgesehen, mittels welchem die Restfederwegsteuerung 2 mit der zweiten Verbindungsschwinge 5 verbunden ist.

Die erste Rastklinke 17 ist ebenso mit einem ersten Federelement 39 verbunden, wobei das erste Federelement 39 ebenso mit dem zweiten Ende 7 der Restfederwegsteuerung 2 verbunden ist. Die zweite Rastklinke 18 ist mit einem zweiten Federelement 40 verbunden, wobei das zweite Federelement 40 mit dem zweiten Ende 7 der Restfederwegsteuerung 2 verbunden ist. Bei einer Drehung einer Rastklinke 17, 18 wird durch das jeweilige Federelement 39, 40 eine Rückstellkraft erzeugt, welche die Rastklinke 17, 18 in ihre Ausgangslage zurückzustellen versucht. Eine Auslenkung einer Rastklinke 17, 18 ist eine Folge der Arretierung des Kolbenelements 10.

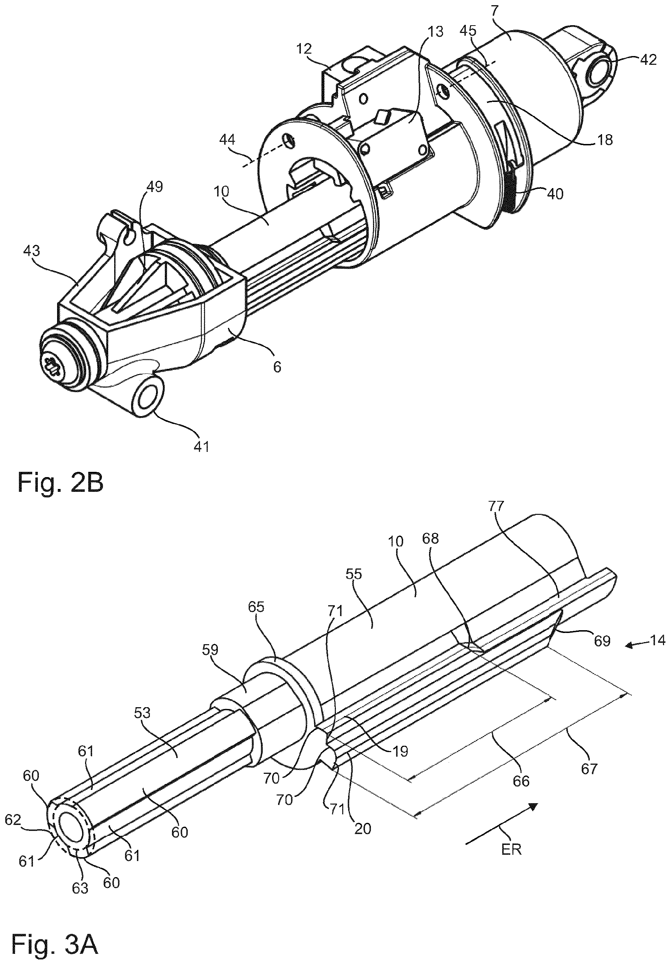

Die Figur 2B zeigt die Restfederwegsteuerung 2 der Figur 2A im zusammengebauten Zustand.

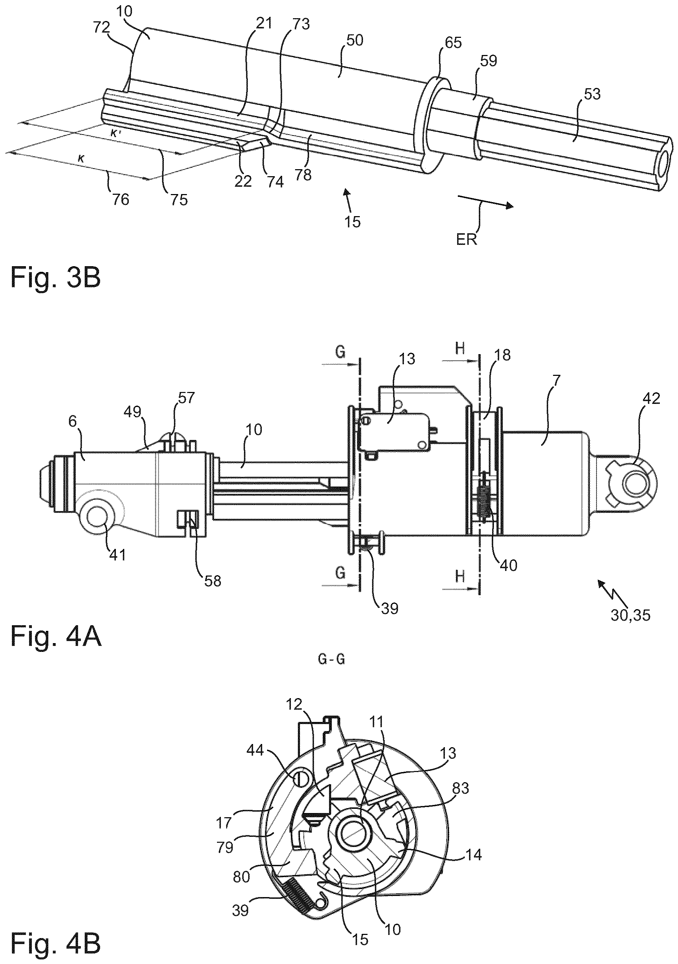

In den Figuren 3A und 3B wird das Kolbenelement 10 der Restfederwegsteuerung 2 genauer dargestellt, wobei die Figur 3A eine erste perspektivische Ansicht und die Figur 3B eine zweite perspektivische Ansicht zeigen.

Die Figur 3A zeigt dabei das Kolbenelement 10 der Restfederwegsteuerung 2 mit einem ersten Funktionsbereich 14, welcher einen ersten Funktionsbereichsabschnitt 19 und einen zweiten Funktionsbereichsabschnitt 20 aufweist.

Der erste Funktionsbereich 14 ist an einem Teilstück des Kolbenelements 10 angeordnet, welches als Funktionskörperteil 55 bezeichnet wird. Ebenso sind an dem Funktionskörperteil 55 der zweite Funktionsbereich 15 mit dem entsprechenden ersten Funktionsbereichsabschnitt 21 und dem zweiten Funktionsbereichsabschnitt 22 angeordnet, wie der Figur 3B zu entnehmen ist.

Das Kolbenelement 10 umfasst des Weiteren auch ein Wellenteil 53, dessen Funktion bereits beschrieben wurde. Zur näheren Ausgestaltung weist das Wellenteil 53 erste Abschnitte 60 und zweite Abschnitte 61 auf, wobei die ersten Abschnitte 60 auf einem ersten Kreis 62 liegen und die zweiten Abschnitte 61 auf einem zweiten Kreis 63 liegen, wobei ein Radius des ersten Kreises 62 größer ist als ein Radius des zweiten Kreises 63. Durch diese Ausgestaltung ist es möglich, dass eine verdrehsichere Verbindung mit dem Drehkörper 49 hergestellt werden kann. Der Drehkörper 49 weist eine Aufnahme 64 (hier nicht gezeigt) des Drehkörpers 49 auf, welche zumindest teilweise komplementär zu dem Wellenteil 53 ausgebildet ist.

Das Kolbenelement 10 umfasst auch noch einen Übergangsbereich 59, welcher zwischen dem Wellenteil 53 und dem Funktionskörperteil 55 angeordnet ist. Der Übergangsbereich 59 ist dabei vorgesehen und ausgebildet, die zweite Gleitbuchse 48 verdrehsicher aufzunehmen. Auch der Übergangsbereich 59 ist zumindest teilweise mit dem Drehkörper 49 verbindbar. Entsprechend ist die Aufnahme 64 des Drehkörpers 49 ausgebildet. Insgesamt ist die Aufnahme 64 des Drehkörpers vorzugsweise derart ausgebildet, das Wellenteil 53 und zumindest teilweise den Übergangsbereich 59 aufzunehmen.

Insbesondere dient der Übergangsbereich 59 als ein Drehlager, insbesondere in Kombination mit der Gleitbuchse 48, welche in die erste Öffnung 54 des ersten Endes 6 gepresst ist. Resultat ist daher, dass das erste Ende 6 starr mit den Gleitbuchsen 48, 50 verbunden ist, wobei das Kolbenelement 10 hierdurch drehbar zu dem ersten Ende 6 gelagert ist.

An dem Funktionsbereich 55 ist eine erste Stirnseite 65 vorgesehen, welche zu dem Übergangsbereich 59 hin zugewandt ist. Die erste Stirnseite 65 dient dabei, vorzugsweise in Verbindung mit der zweiten Gleitbuchse 48 (hier nicht gezeigt) als ein Endanschlag der Bewegung des ersten Endes 6 relativ zu dem zweiten Ende 7.

Wie bereits erwähnt weist das Funktionskörperteil 55 den ersten Funktionsbereich 14 auf mit dem Funktionsbereichsabschnitt 19 und dem zweiten Funktionsbereichsabschnitt 20. Die Funktionsbereichsabschnitte 19, 20 beginnen an der ersten Stirnseite 65 und verlaufen in Erstreckungsrichtung ER des Kolbenelements 10 bzw. des Stangenelements 11. In einer Draufsicht auf die erste Stirnseite 65 sind die Funktionsbereichsabschnitte 19, 20 derart ausgebildet, dass sie stufenförmig ausgebildet sind, das heißt, dass jeweils ein Anteil der Funktionsbereichsabschnitte 19, 20 in radialer Richtung der ersten Stirnfläche 65 und ein weiterer Anteil der Funktionsbereichsabschnitte 19, 20 im Wesentlichen senkrecht zu dem Anteil verlaufend angeordnet ist.

Die Funktionsbereichsabschnitte 19, 20 erstrecken sich ausgehend von der ersten Stirnfläche 65 in Erstreckungsrichtung ER, wobei eine Länge 66 des ersten Funktionsbereichsabschnitts 19 kleiner ist als eine Länge 67 des zweiten Funktionsbereichsabschnitts 20.

Der erste Funktionsbereichsabschnitt 19 verläuft, wie bereits erwähnt, beginnend von der Stirnfläche 65 mit der Länge 66 in Erstreckungsrichtung ER. Gleiches gilt für den zweiten Funktionsbereichsabschnitt 20, mit der Länge 67 in Erstreckungsrichtung ER. Nach dem Erreichen der Länge 66 endet der erste Funktionsbereichsabschnitt 19, indem ein erster Verjüngungsbereich 68 vorgesehen ist im Anschluss an den ersten Funktionsbereichsabschnitt 19. Gleiches gilt für den zweiten Funktionsbereichsabschnitt 20 mit einem zweiten Verjüngungsbereich 69.

Der erste Verjüngungsbereich 68 ist dabei derart ausgestaltet, dass sich der weitere Anteil 71 des ersten Funktionsbereichsabschnitts 19 verjüngt. Der zweite Verjüngungsbereich 69 ist dabei derart ausgestaltet, dass sich der Anteil 70 des zweiten Funktionsbereichsabschnitts 20 verjüngt.

Die Figur 3B zeigt das Kolbenelement 10 der Figur 3A in einer weiteren perspektivischen Darstellung, vorliegend um 90° gedreht. Zu erkennen sind nun der zweite Funktionsbereich 15 mit dem zugehörigen ersten Funktionsbereichsabschnitt 21 und dem zweiten Funktionsbereichsabschnitt 22. Wie der Figur 3B zu entnehmen ist, beginnen der erste Funktionsbereichsabschnitt 21 und der zweite Funktionsbereichsabschnitt 22 nun nicht mehr an der ersten Stirnseite 65, sondern an einer zweiten Stirnseite 72, welche vorzugsweise auch ein Ende des Kolbenelements 10 definiert. Die Länge des ersten Funktionsbereichsabschnitts 21 ist dabei länger als die Länge des zweiten Funktionsbereichsabschnitts 22, in Erstreckungsrichtung ER gesehen.

Ebenso sind ein dritter Verjüngungsbereich 73 und ein vierter Verjüngungsbereich 74 vorgesehen, welche sich an die jeweiligen Funktionsbereichsabschnitte 21, 22 anschließen. Der dritte Verjüngungsbereich 73 ist dabei ähnlich dem ersten Verjüngungsbereich 68 und der vierte Verjüngungsbereich 74 ähnlich dem zweiten Verjüngungsbereich 69 ausgebildet.

Durch den ersten Verjüngungsbereich 68 und den dritten Verjüngungsbereich 73 ist durch dessen Ausgestaltung möglich, dass die zugehörigen ersten Funktionsbereichsabschnitte 19, 21 weiterhin mit dem Schalterelement bzw. dem Ventilelement kontaktiert werden können, um im Normalbereich die Sitzhöhe h einstellen zu können.

Die ersten Funktionsbereichsabschnitte 19, 21 kontaktieren entweder das Schalterelement oder das Ventilelement, wohingegen die zweiten Funktionsbereichsabschnitte 20, 22 eine Arretierung mit einer der Rastklinken 17, 18 hervorrufen.

Die Längen 67, 76 der zweiten Funktionsbereichsabschnitte 20, 22 sind derart ausgebildet, dass nach Erreichen des Endes der Längen 67, 76 die Arretierung mit der entsprechenden Rastklinke 17, 18 gelöst wird durch Verschiebung des Kolbenelements 10 relativ zum Stangenelement 11. Die Arretierung wird gelöst, da durch den entsprechenden Verjüngungsbereich 69, 75 kein Eingriff zwischen dem zweiten Funktionsbereichsabschnitten 20, 22 mit der entsprechenden Rastklinke 17, 18 mehr gegeben ist.

Im Anschluss an die ersten Funktionsbereichsabschnitte 19, 21 sind entsprechend ein erster Anschlussbereich 77 und ein zweiter Anschlussbereich 78 vorgesehen, mittels welchem das Kolbenelement 10 mit dem Schalterelement oder dem Ventilelement in Kontakt bringbar ist.

Die Figuren 4A bis 4E zeigen die Restfederwegsteuerung 2 in verschiedenen Darstellungen.

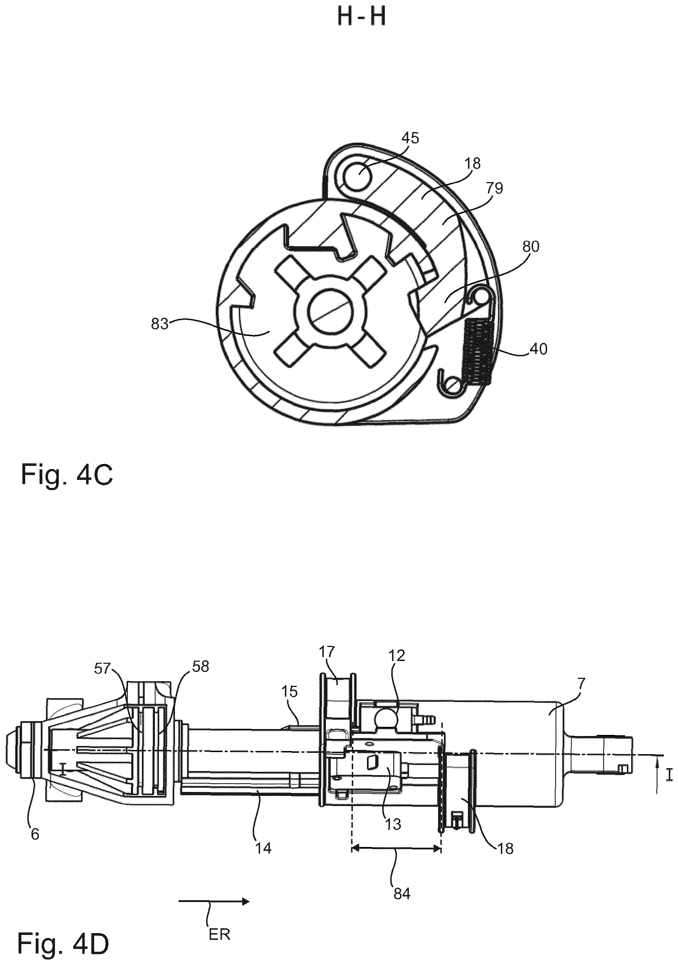

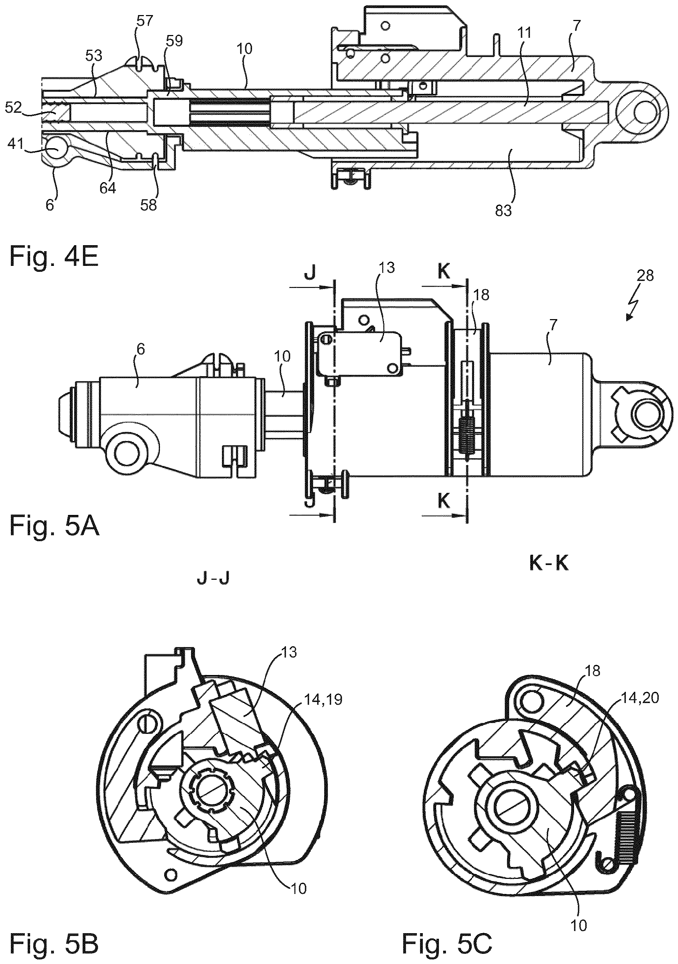

Die Figur 4A zeigt eine Seitenansicht der Restfederwegsteuerung 2, die Figur 4B einen Schnitt entlang der Linie G-G, die Figur 4C einen Schnitt entlang der Linie H-H, die Figur 4D eine Draufsicht und die Figur 4E einen Schnitt entlang der Linie I-I.

Insbesondere zeigen die Figuren 4A bis 4E die Restfederwegsteuerung in einer Null-Stellung 35, das heißt, dass weder das Ventilelement 12 noch das Schalterelement 13 mittels des Kolbenelements 10 kontaktiert werden.

Dabei ist ebenso erkennbar, dass der Drehkörper 49 eine erste Bowdenzugaufnahme 57 und eine zweite Bowdenzugaufnahme 58 aufweisen, deren Funktion im Zusammenhang mit dem Betätigungselement beschrieben werden.

Wie bereits erwähnt, befindet sich die Restfederwegsteuerung 2 in dem Normalbereich 30, das heißt, dass keine Arretierung des Kolbenelements 10 möglich ist. Eine Kontaktierung des Kolbenelements 10 mit dem Schalterelement 13 oder dem Ventilelement 12 hingegen ist möglich, um die Sitzhöhe h im Normalbereich 30 einstellen zu können.

Die Querschnitte der Figuren 4B und 4C zeigen genauer die jeweiligen Stellungen des Kolbenelements 10.

Die Figur 4B zeigt den Querschnitt entlang der Linie G-G, wobei das Kolbenelement 10 weder mit dem Ventilelement 12 noch mit dem Schalterelement 13 in Kontakt steht. Das Kolbenelement 10 befindet sich also in der Null-Stellung 35. Ebenso ist keine Arretierung des Kolbenelements 10 mittels einer der Rastklinken 17, 18 vorgesehen.

Die Rastklinken 17, 18 sind dabei in ähnlicher Art und Weise ausgebildet. Die Rastklinken 17, 18 umfassen jeweils einen gebogenen Abschnitt 79, welcher drehbar um die erste Drehachse 44 bzw. um die zweite Drehachse 45 mit dem zweiten Ende 7 verbunden ist. Weiter umfassen die Rastklinken 17, 18 jeweils einen geraden Abschnitt 80, welcher mit dem gebogenen Abschnitt 79 verbunden ist und welcher sich durch eine dritte Öffnung 81 bzw. eine vierte Öffnung 82 des zweiten Endes 7 hindurch in ein Inneres 83 in das zweite Ende 7 erstreckt, um so mit dem Kolbenelement 10 in Kontakt gebracht werden zu können. Das Innere 83 ist dabei im Wesentlichen zylinderförmig ausgebildet. Dabei erstrecken sich die Funktionsbereiche 14, 15 soweit, dass sich die Funktionsbereiche 14, 15 mit den Rastklinken 17, 18 in Kontakt stehen, wenn die Sitzhöhe h in einem Restfederwegbereich 28, 29 liegt.

Durch das Kontaktieren mit dem jeweiligen zweiten Funktionsbereichsabschnitt 20, 22 wird die entsprechende Rastklinke 17, 18 nach außen gedrückt und rastet anschließend mit dem zweiten Funktionsbereichsabschnitt 20, 22 ein, so dass eine Arretierung des Kolbenelements 10 hinsichtlich der Drehung gegenüber dem Stangenelement 11 bewirkt wird. Das Einrasten der Rastklinke 17, 18 wird dadurch unterstützt, dass ein erstes Federelement 39 bzw. ein zweites Federelement 40 vorgesehen ist, welches einerseits mit dem zweiten Ende 7 und andererseits mit der Rastklinke 17, 18 verbunden ist. Durch das nach außen Drücken des geraden Abschnitts 80 wird die Rastklinke 17, 18 um die jeweilige Drehachse 44, 45 gedreht und durch das Federelement 39, 40 wieder zurückgezogen.

Die Ausgestaltungen der Rastklinken 17, 18 mit den Federelementen 39, 40 sowie des Kolbenelements 10 im Querschnitt ist besonders gut den Figuren 4B und 4C zu entnehmen.

Die Figur 4D zeigt eine Draufsicht der Restfederwegsteuerung 2, wobei die Rastklinken 17, 18 in einem Abstand 84 zueinander angeordnet sind, in Erstreckungsrichtung ER gesehen. Weiter ist zu erkennen, dass der Drehkörper 49 eine erste Bowdenzugaufnahme 57 und eine zweite Bowdenzugaufnahme 58 aufweist, wobei die Bowdenzugaufnahmen 57, 58 jeweils zumindest teilweise entlang des Umfangs des Drehkörpers 49 verlaufen.

Durch die Beabstandung der Rastklinken 17, 18 und Funktionsbereichsabschnitten 14, 15 und deren Ausgestaltung sowie die Beabstandung des Ventilelements 12 und des Schalterelements 13 kann eine gute Ansteuerung und Arretierung, insbesondere unabhängige Arretierung, des Ventilelements 12 und des Schalterelements 13 gewährleistet werden.

In der Figur 4E ist ein Schnitt entlang der Linie I-I der Figur 4D dargestellt. Wie hierbei gut zu erkennen ist, ist die Aufnahme 64 komplementär zu dem Wellenteil 53 und dem Übergangsbereich 59 ausgebildet, wobei der Übergangsbereich 59 teilweise in der Aufnahme 64 aufgenommen ist.

In den Figuren 5A-5C, 6A-6C, 7A-7B und 8A-8B wird die Funktionsweise der Restfederwegsteuerung 2 nochmals genauer dargestellt.

In der Figur 5A befindet sich die Sitzhöhe h im unteren Restfederwegbereich 28, so dass also der Sitz nicht ausreichend viel Federweg bereitstellen kann; der Sitz ist also zu tief. Gemäß der Ausgestaltung der Restfederwegsteuerung 2, insbesondere des Kolbenelements 10, und nach einer Betätigung der Restfederwegfederung 2 nach oben, das heißt, um den Fahrzeugsitz nach oben zu verstellen, wird durch die resultierende Drehung des Kolbenelements 10 der Schalter 13 durch den ersten Funktionsbereichsabschnitt 19 des ersten Funktionsbereichs 14 betätigt und der zweite Funktionsbereichsabschnitt 20 des ersten Funktionsbereichs 14 durch die zweite Rastklinke 18 arretiert. Dies bedeutet, dass das Schalterelement 13 so lange betätigt wird, solange die Arretierung des zweiten Funktionsbereichsabschnitts 20 aufrecht erhalten wird.

In der Figur 5B ist die Kontaktierung des Schalterelements 13 zu erkennen, in der Figur 5C die Arretierung des Kolbenelements 13 mittels der zweiten Rastklinke 18.

Dadurch, dass das Schalterelement 13 betätigt wird, erhöht sich die Luftmenge der Luftfeder 3, wodurch die Sitzhöhe h des Fahrzeugsitzes sich erhöht. Das Schalterelement 13 wird solange betätigt, solange das Kolbenelement 10 durch die zweite Rastklinke 18 arretiert ist. Durch die Erhöhung der Luftmenge und der Erhöhung der Sitzhöhe h wird auch das Kolbenelement 10 gegenüber dem Stangenelement 11 verschoben. Die Arretierung wird gelöst, wenn durch die Verschiebung des Kolbenelements 10 der zweite Funktionsbereichsabschnitt 20 passiert wurde und nicht mehr mit der Rastklinke 18 in Kontakt steht, wodurch das Kolbenelement wieder in die Null-Stellung rückgestellt wird durch das Betätigungselement, welches in weiteren Figuren näher beschrieben wird. Wird die Arretierung gelöst und das Kolbenelement 10 wieder in die Null-Stellung 35 gedreht, das heißt, dass sich die Sitzhöhe h in dem Normalbereich befindet, ist es jedoch weiterhin möglich, aufgrund der Ausgestaltung des ersten Funktionsbereichs, das Schalterelement 13 manuell weiter zu betätigen.

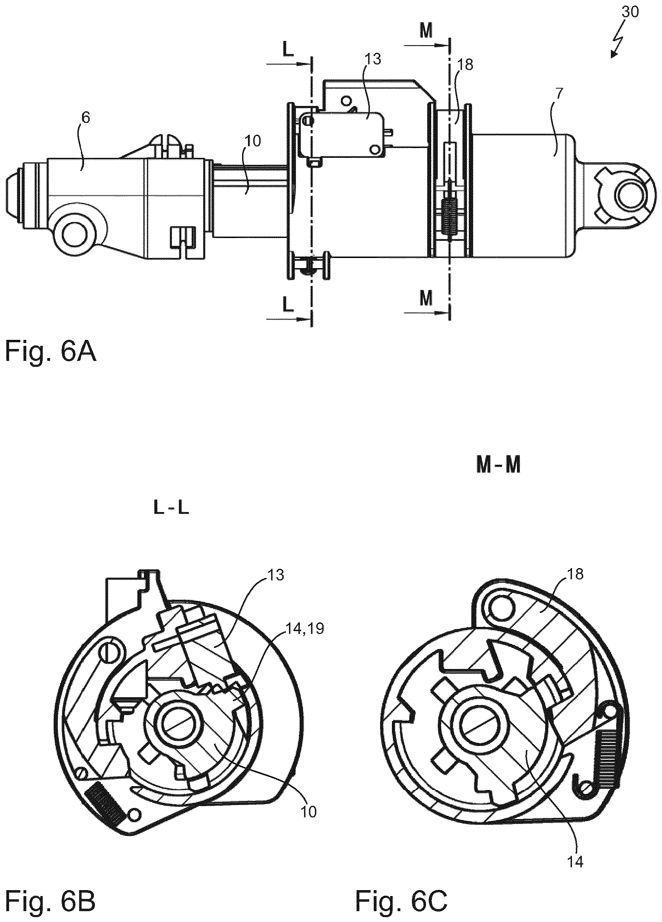

Eine derartige manuelle Betätigung des Schalterelements 13 ist den Figuren 6A bis 6C zu entnehmen. Die Restfederwegsteuerung 2 befindet sich im Normalbereich 30 und das Kolbenelement 30 kann aus der Null-Stellung herausgedreht werden.

Bei Betätigung im Normalbereich 30 steht der erste Funktionsbereichsabschnitt 19 mit dem Schalterelement 13 in Kontakt, jedoch ist keine Arretierung des Kolbenelements 10 zu erkennen, wie in der Figur 6C dargestellt. Durch die Ausgestaltung des ersten Funktionsbereichs 14 ist dies so vorgesehen.

Insbesondere sind den Figuren 6A bis 6C manuelle Verstellungen nach oben zu entnehmen, das heißt, dass die Sitzhöhe h des Fahrzeugsitzes erhöht werden soll.

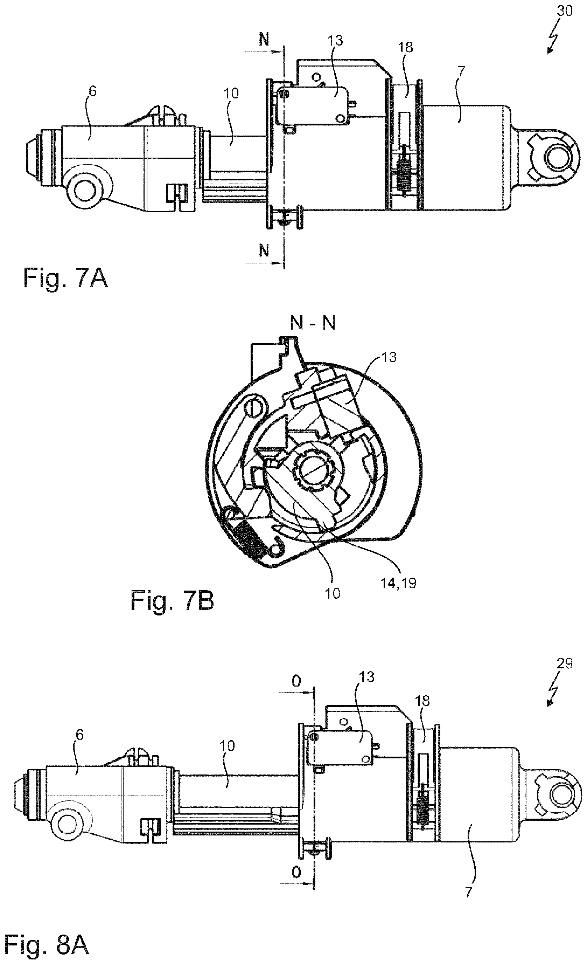

Den Figuren 7A und 7B sind manuelle Verstellungen nach unten zu entnehmen, das heißt, dass die Sitzhöhe h des Fahrzeugsitzes vermindert werden soll.

Dazu steht das Kolbenelement 10 mittels des zweiten Funktionsbereichs 15 und insbesondere mittels des ersten Funktionsbereichsabschnitts 21 mit dem Ventilelement 12 in Kontakt, wodurch Luft aus der Luftfeder 3 abgelassen werden kann. Da sich die Sitzhöhe h im Normalbereich befindet, ist keine Arretierung des Kolbenelements 10 mittels der ersten Rastklinke 17 vorgesehen.

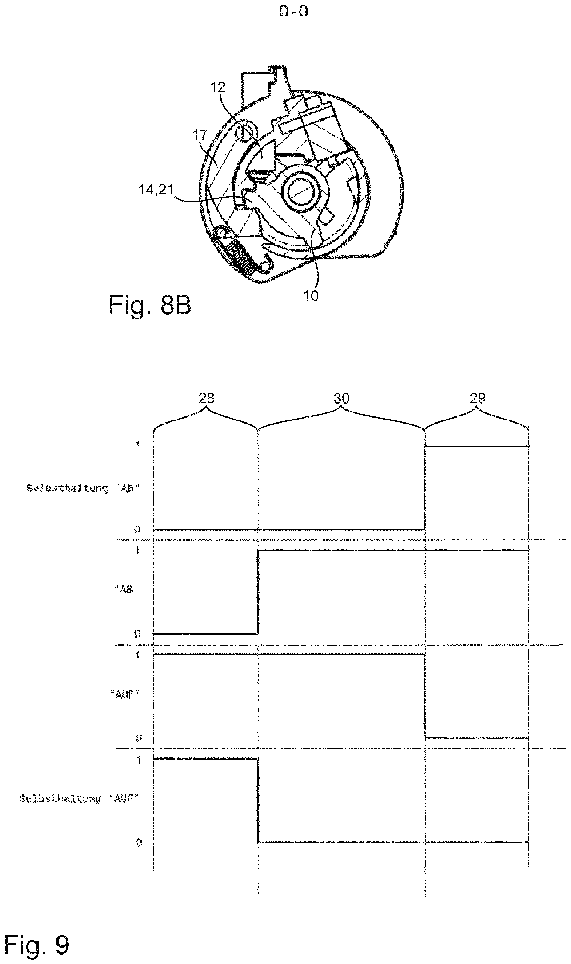

In den Figuren 8A und 8B ist dabei die Sitzhöhe h im oberen Restfederwegbereich 29, das heißt, dass die Sitzhöhe h zu hoch ist und nicht genügend Federweg nach oben bereitsteht. Durch Betätigung der Restfederwegsteuerung 2 wird das Kolbenelement 10 verdreht und in Kontakt mit dem Ventilelement 12 mittels des zweiten Funktionsbereichs 15 und insbesondere mittels des ersten Funktionsbereichsabschnitts 21 gebracht, wobei auch durch den zweiten Funktionsbereichsabschnitt 22 und der ersten Rastklinke 17 das Kolbenelement 10 arretiert wird.

In der Figur 9 wird das Funktionsprinzip zur Übersicht als ein Funktionsdiagramm dargestellt, wobei die möglichen Sitzhöhen h dargestellt werden durch den unteren Restfederwegbereich 28, den oberen Restfederwegbereich 29 sowie den Normalbereich 30.

Die Bezeichnung "Selbsthaltung AB" bezieht sich darauf, dass die Sitzhöhe h zu hoch ist und nach einer Betätigung daher das Kolbenelement 10 mit dem Ventilelement 12 und mit der ersten Rastklinke 17 arretiert ist, wodurch Luft aus der Luftfeder entweichen kann und die Sitzhöhe h reduziert wird, solange das Kolbenelement 10 arretiert ist.

Die Bezeichnung "Selbsthaltung AUF" bezieht sich darauf, dass die Sitzhöhe h zu niedrig ist und nach einer Betätigung daher das Kolbenelement 10 mit dem Schalterelement 13 und mit der zweiten Rastklinke 18 arretiert ist, wodurch Luft in die Luftfeder strömen kann und die Sitzhöhe h erhöht wird, solange das Kolbenelement 10 arretiert ist.

Die Bezeichnung "AB" beschreibt, in welchen Stellungen eine Aktivierung des Ventilelements 12 möglich ist.

Die Bezeichnung "AUF" beschreibt, in welchen Stellungen eine Aktivierung des Schalterelements 13 möglich ist.

Weiter bezeichnet "1" aktiviert und "0" deaktiviert.

Dabei ist auf das Folgende zu achten: befindet sich die Sitzhöhe h in dem unteren Restfederwegbereich 28 oder in dem oberen Restfederwegbereich 29, so ist das Kolbenelement 10 arretiert und in Kontakt mit dem Ventilelement 12 oder dem Schalterelement 13. Dies wird dadurch dargestellt, dass die Arretierung aktiv ist und entsprechend auch das Ventilelement 12 oder das Schalterelement 13. Befindet sich die Sitzhöhe im Normalbereich 30, so ist keine Arretierung des Kolbenelements 10 vorgesehen, so dass die Restfederwegsteuerung 2 manuell betätigt werden kann. Die wird dadurch dargestellt, dass das Ventilelement 12 bzw. das Schalterelement 13 mit "1" bezeichnet ist im Normalbereich 30.

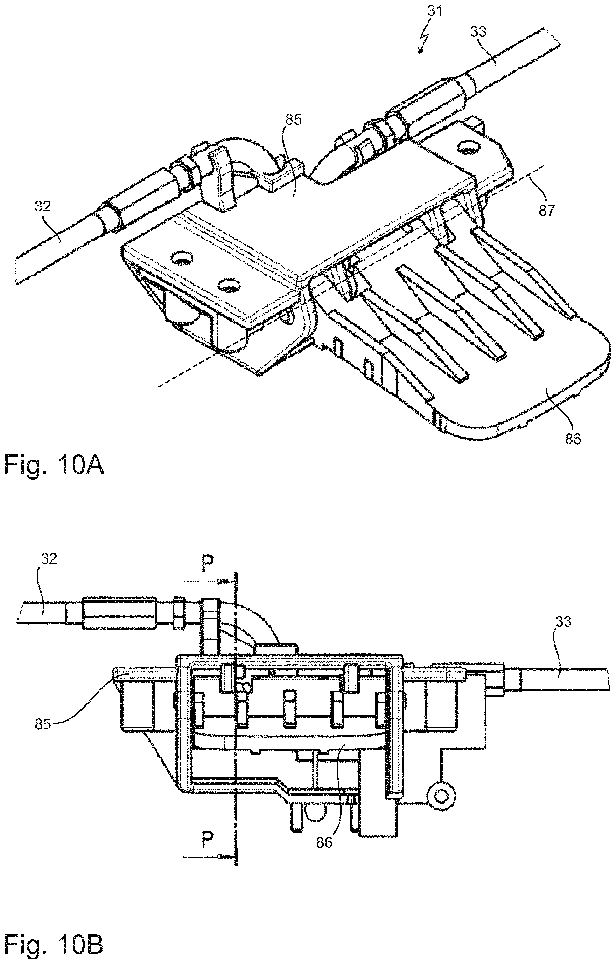

In den Figuren 10A bis 10E wird das Betätigungselement 31 näher dargestellt und dessen Funktionsweise genauer betrachtet.

Das Betätigungselement 31 umfasst einen Grundkörper 85 und einen Betätigungselementhebel 86, welcher mit dem Grundkörper 85 drehbar um eine dritte Drehachse 86 verbunden ist.

Weiter sind ein erster Bowdenzug 32 und ein zweiter Bowdenzug 33 vorgesehen, welche einerseits mit einem ersten Ende mit dem Drehkörper 49 verbunden sind und andererseits mit dem Betätigungselement 31.

Dabei sind die Bowdenzüge 32, 33 derart mit dem Drehkörper verbunden, dass bei einer Betätigung des Betätigungselements 31 nach oben der Drehkörper 49 in eine Richtung und bei einer Betätigung des Betätigungselements 31 nach unten der Drehkörper 49 in eine entsprechende andere Richtung gedreht wird.

Ebenso sind die Bowdenzüge 32, 33 derart mit dem Betätigungselement 31 verbunden, dass bei einer Betätigung des Betätigungselements 31 nach oben der erste Bowdenzug 32 einen Zug auf den Drehkörper 49 überträgt und bei einer Betätigung des Betätigungselements 31 nach unten der zweite Bowdenzug 33 einen Zug auf den Drehkörper 49 überträgt. Die genaue Anordnung der Bowdenzüge 32, 33 zu dem Betätigungselement 31 wird in den nachfolgenden Figuren genauer dargestellt.

Der Grundkörper 85 kann dabei seitlich an dem Fahrzeugsitz oder mittig vorne an dem Fahrzeugsitz angeordnet sein.

Die Figur 10B zeigt eine Vorderansicht des Betätigungselements 31.

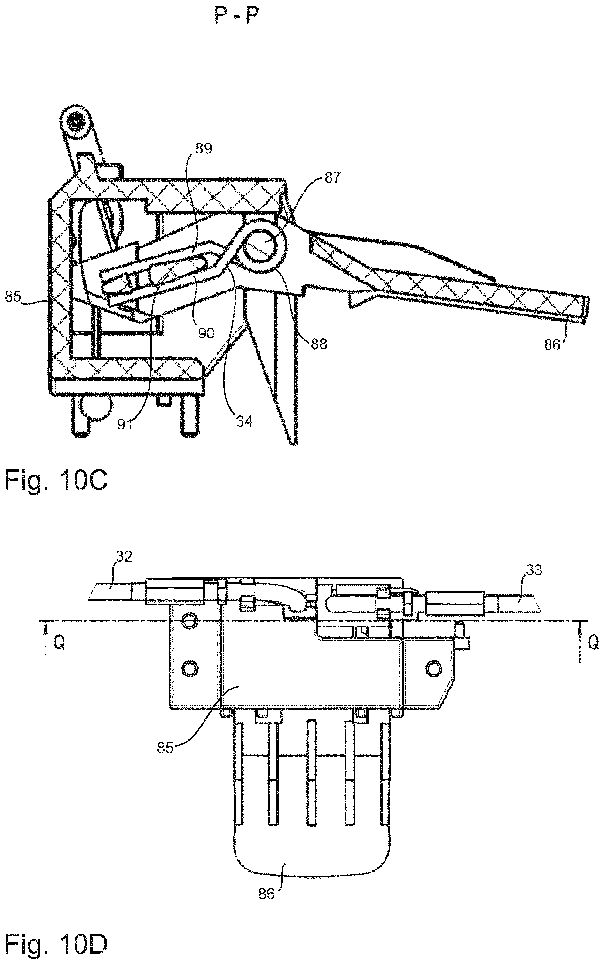

Die Figur 10C zeigt einen Schnitt gemäß der Linie P-P der Figur 10B. Wie zu erkennen ist, ist der Betätigungselementhebel 86 drehbar um die dritte Drehachse 87 mit dem Grundkörper 85 verbunden. Weiter ist die Rückstellfeder 34 derart vorgesehen, dass die Rückstellfeder 34 einerseits mit dem Grundkörper 85 und andererseits mit dem Betätigungselementhebel 86 verbunden ist.

Vorzugsweise umfasst die Rückstellfeder einen Federkopf 88 sowie einen ersten Schenkel 89 und einen zweiten Schenkel 90. Besonders bevorzugt ist der Federkopf 88 mit dem Grundkörper 85 starr verbunden und die Schenkel 89, 90 in Kontakt mit einem Kontaktierungselement 91 des Betätigungselementhebels 86. Bei einer Betätigung des Betätigungselementhebels 86 nach oben oder nach unten wird der Betätigungselementhebel 86 entsprechend um die dritte Drehachse 87 gedreht, so dass ebenso auch das Kontaktierungselement 91 eine Drehung erfährt. Durch die Drehung des Kontaktierungselements 91 und dadurch, dass die Schenkel 89, 90 mit dem Kontaktierungselement 91 in der Null-Stellung 35, also in der nicht-verdrehten Stellung, in Kontakt stehen, wird der entsprechende Schenkel 89, 90 der Rückstellfeder 34 ausgelenkt, wodurch eine Rückstellkraft erzeugt wird.

Bei einer Betätigung des Betätigungselementhebels 86 nach unten bewegt sich das Kontaktierungselement 91 nach oben und lenkt dabei den ersten Schenkel 89 aus. Bei einer Betätigung des Betätigungselementhebels 86 nach oben bewegt sich das Kontaktierungselement 91 nach unten und lenkt dabei den zweiten Schenkel 90 aus.

Durch die dadurch erzeugte Rückstellkraft wird nach Loslassen des Betätigungselementhebels 86 der Betätigungselementhebel 86 wieder in die Null-Stellung 35 zurückgestellt, das heißt auch, dass das Kolbenelement 10 in seine Null-Stellung 35 zurückgedreht wird, falls das Kolbenelement 10 nicht arretiert ist. Nach Lösen der Arretierung wird das Kolbenelement 10 dann anschließend in die Null-Stellung 35 zurückgedreht, wenn das Betätigungselement 31 nicht weiter betätigt wird.

Die Figur 10D zeigt das Betätigungselement 31 in einer Draufsicht.

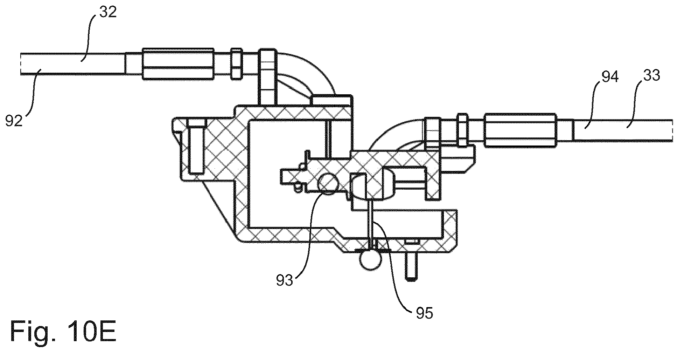

Die Figur 10E zeigt einen Schnitt entlang der Linie Q-Q der Figur 10D. Es ist dabei zu erkennen, dass der erste Bowdenzug 32 eine erste Hülle 92 und ein erstes Seilzugelement 93 aufweist und der zweite Bowdenzug 33 eine zweite Hülle 94 und ein zweites Seilzugelement 95 aufweist.

Dabei ist das erste Seilzugelement 93 fest mit dem Betätigungselementhebel 86 verbunden, so dass bei einer Betätigung des Betätigungselementhebels 86 nach oben das erste Seilzugelement 93 nach unten gezogen wird, wodurch ein Zug auf den Drehkörper 49 übertragen wird. Bei einer Bewegung des Betätigungselementhebels 86 nach unten wird das erste Seilzugelement 93 nicht bewegt. Die erste Hülle 92 ist dabei starr mit dem Gehäuse bzw. dem Grundkörper 85 verbunden.

Das zweite Seilzugelement 95 hingegen ist mit dem Grundkörper 85 fest verbunden und die zweite Hülle 94 ist mit dem Betätigungselementhebel 86 starr verbunden. Bei einer Betätigung nach unten wird die zweite Hülle 94 bewegt, so dass ein Zug auf den Grundkörper ausgewirkt wird.

### Bezugszeichenliste

- 1: Fahrzeugsitz
- 2: Restfederwegsteuerung
- 3: Luftfeder
- 4: erste Verbindungsschwinge
- 5: zweite Verbindungsschwinge
- 6: erstes Ende der Restfederwegsteuerung
- 7: zweites Ende der Restfederwegsteuerung
- 10: Kolbenelement
- 11: Stangenelement
- 12: Ventilelement
- 13: Schalterelement
- 14: erster Funktionsbereich
- 15: zweiter Funktionsbereich
- 16: Luftfördereinheit
- 17: erste Rastklinke
- 18: zweite Rastklinke
- 19: erster Funktionsbereichsabschnitt des ersten Funktionsbereichs
- 20: zweiter Funktionsbereichsabschnitt des ersten Funktionsbereichs
- 21: erster Funktionsbereichsabschnitt des zweiten Funktionsbereichs
- 22: zweiter Funktionsbereichsabschnitt des zweiten Funktionsbereichs
- 24: erste Länge des ersten Funktionsbereichsabschnitts des ersten Funktionsbereichs
- 25: zweite Länge des zweiten Funktionsbereichsabschnitts des ersten Funktionsbereichs
- 26: erste Länge des ersten Funktionsbereichsabschnitts des zweiten Funktionsbereichs
- 27: zweite Länge des zweiten Funktionsbereichsabschnitts des zweiten Funktionsbereichs
- 28: unterer Restfederwegbereich
- 29: oberer Restfederwegbereich
- 30: Normalbereich
- 31: Betätigungselement
- 32: erster Bowdenzug
- 33: zweiter Bowdenzug
- 34: Rückstellfeder
- 35: Null-Stellung
- 36: Unterteil
- 37: Oberteil
- 38: Dämpfer
- 39: erstes Federelement
- 40: zweites Federelement
- 41: erstes Befestigungsohr
- 42: zweites Befestigungsohr
- 43: Aufnahmen
- 44: erste Drehachse
- 45: zweite Drehachse
- 46: Gleitbuchse
- 47: erste Gleitbuchse
- 48: zweite Gleitbuchse
- 49: Drehkörper
- 50: dritte Gleitbuchse
- 51: viertes Abstandselement
- 52: Schraube
- 53: Wellenteil
- 54: erste Öffnung
- 55: Funktionskörperteil
- 56: zweite Öffnung
- 57: erste Bowdenzugaufnahme
- 58: zweite Bowdenzugaufnahme
- 59: Übergangsbereich
- 60: erster Abschnitt
- 61: zweiter Abschnitt
- 62: erster Kreis
- 63: zweiter Kreis
- 64: Aufnahme des Drehkörpers
- 65: erste Stirnseite
- 66: Länge des ersten Funktionsbereichsabschnitts
- 67: Länge des zweiten Funktionsbereichsabschnitts
- 68: erster Verjüngungsbereich
- 69: zweiter Verjüngungsbereich
- 70: Anteil
- 71: weiterer Anteil
- 72: zweite Stirnseite
- 73: dritter Verjüngungsbereich
- 74: vierter Verjüngungsbereich
- 75: Länge erster Funktionsbereichsabschnitt
- 76: Länge zweiter Funktionsbereichsabschnitt
- 77: erster Anschlussbereich
- 78: zweiter Anschlussbereich
- 79: gebogener Abschnitt
- 80: gerader Abschnitt
- 81: dritte Öffnung
- 82: vierte Öffnung
- 83: Inneres
- 84: Abstand
- 85: Grundkörper
- 86: Betätigungselementhebel
- 87: dritte Drehachse
- 88: Federkopf
- 89: erster Schenkel
- 90: zweiter Schenkel
- 91: Kontaktierungselement
- 92: erste Hülle
- 93: erstes Seilzugelement
- 94: zweite Hülle
- 95: zweites Seilzugelement
- ER: Erstreckungsrichtung

## Patentansprüche

1. Fahrzeugsitz (1) mit einer Restfederwegsteuerung (2) und einer Luftfeder (3), wobei die Restfederwegsteuerung (2) und die Luftfeder (3) jeweils ein erstes Ende (6), welches mit einer ersten Verbindungsschwinge (4) des Fahrzeugsitzes (1) verbunden ist, und jeweils ein zweites Ende (7), welches mit einer zweiten Verbindungsschwinge (5) des Fahrzeugsitzes (1) verbunden ist, aufweisen, und die Restfederwegsteuerung (2) ein Kolbenelement (10), welches mit dem ersten Ende (6) der Restfederwegsteuerung (2) verbunden ist, und ein Stangenelement (11), welches mit dem zweiten Ende (7) der Restfederwegsteuerung (2) verbunden ist, umfasst,
wobei
das Kolbenelement (10) mittels einer Dreh- und Schiebebewegung gegenüber dem Stangenelement (11) mit einem Ventilelement (12) oder einem Schalterelement (13) in Kontakt bringbar ist, um eine Luftmenge der Luftfeder (3) einzustellen,
**dadurch gekennzeichnet, dass**
das Kolbenelement (10) einen ersten Funktionsbereich (14) und einen zweiten Funktionsbereich (15) umfasst, wobei in Abhängigkeit von einer Drehstellung und einer Längsstellung des Kolbenelements (10) relativ zum Stangenelement (11) der erste Funktionsbereich (14) mit dem Schalterelement (13) und der zweite Funktionsbereich (15) mit dem Ventilelement (12) in Kontakt bringbar ist.

2. Fahrzeugsitz (1) nach Anspruch 1,
**dadurch gekennzeichnet, dass**
das Schalterelement (13) zur Ansteuerung einer Luftfördereinheit zum Fördern von Luft in die Luftfeder (3) ausgebildet und vorgesehen ist, und das Ventilelement (12) ausgebildet und vorgesehen ist, um Luft aus der Luftfeder (3) entweichen zu lassen.

3. Fahrzeugsitz (1) nach einem der vorhergehenden Ansprüche,
**dadurch gekennzeichnet, dass**
eine erste Rastklinke (17) und eine zweite Rastklinke (18) an dem zweiten Ende (7) der Restfederwegsteuerung (2) angeordnet sind, wobei der erste Funktionsbereich (14) mittels der ersten Rastklinke (17) und der zweite Funktionsbereich (15) mittels der zweiten Rastklinke (18) hinsichtlich einer Drehung des Kolbenelements (10) arretierbar sind.

4. Fahrzeugsitz (1) nach Anspruch 3,
**dadurch gekennzeichnet, dass**
der erste Funktionsbereich (14) einen ersten Funktionsbereichsabschnitt (19) und einen zweiten Funktionsbereichsabschnitt (20) umfasst, wobei der erste Funktionsbereichsabschnitt (19) mit dem Schalterelement (13) und der zweite Funktionsbereichsabschnitt (20) mit der zweiten Rastklinke (18) in Kontakt bringbar sind.

5. Fahrzeugsitz (1) nach Anspruch 3,
**dadurch gekennzeichnet, dass**
der zweite Funktionsbereich (15) einen ersten Funktionsbereichsabschnitt (21) und einen zweiten Funktionsbereichsabschnitt (22) aufweist, wobei der erste Funktionsbereichsabschnitt (21) mit dem Ventilelement (12) und der zweite Funktionsbereichsabschnitt (22) mit der ersten Rastklinke (17) in Kontakt bringbar sind.

6. Fahrzeugsitz (1) nach Anspruch 3,
**dadurch gekennzeichnet, dass**
die erste Rastklinke (17) und die zweite Rastklinke (18) in einer Erstreckungsrichtung (ER) des Stangenelements (11) in einem Abstand (84) voneinander beabstandet sind.

7. Fahrzeugsitz (1) nach Anspruch 4,
**dadurch gekennzeichnet, dass**
der erste Funktionsbereichsabschnitt (19) des ersten Funktionsbereichs (14) eine erste Länge (24) und der zweite Funktionsbereichsabschnitt (20) des ersten Funktionsbereichs (14) eine zweite Länge (25) in einer Erstreckungsrichtung (ER) des Kolbenelements (10) gesehen aufweisen.

8. Fahrzeugsitz (1) nach Anspruch 5,
**dadurch gekennzeichnet, dass**
der erste Funktionsbereichsabschnitt (21) des zweiten Funktionsbereichs (15) eine erste Länge (26) und der zweite Funktionsbereichsabschnitt (22) des zweiten Funktionsbereichs (15) eine zweite Länge (27) in einer Erstreckungsrichtung (ER) des Kolbenelements (10) gesehen aufweisen.

9. Fahrzeugsitz (1) nach einem der vorangegangenen Ansprüche,
**dadurch gekennzeichnet, dass**
ein unterer Restfederwegbereich (28) und ein oberer Restfederwegbereich (29) sowie ein zwischen dem unteren (28) und dem oberen Restfederwegbereich (29) angeordneten Normalbereich (30) des Fahrzeugsitzes (1) vorgesehen sind, wobei wenn sich der Fahrzeugsitz (1) in dem unteren Restfederwegbereich (28) befindet, mittels einer Drehung des Kolbenelements (10) der erste Funktionsbereich (14) mit dem Schalterelement (13) in Kontakt steht, und wenn sich der Fahrzeugsitz (1) in dem oberen Restfederwegbereich (29) befindet, mittels einer Drehung des Kolbenelements (10) der zweite Funktionsbereich (15) mit dem Ventilelement (12) in Kontakt bringbar ist.

10. Fahrzeugsitz (1) nach einem der vorangegangenen Ansprüche,
**dadurch gekennzeichnet, dass**
ein Betätigungselement (31) zum Betätigen der Restfederwegsteuerung (2) vorgesehen ist, wobei ein erster Bowdenzug (32) und ein zweiter Bowdenzug (33) mit dem Betätigungselement (31) einerseits und mit Kolbenelement (10) verbunden sind.

11. Fahrzeugsitz (1) nach Anspruch 10,
**dadurch gekennzeichnet, dass**
bei einer Betätigung des Betätigungselements (31) in eine erste Richtung der erste Bowdenzug (32) einen Zug auf das Kolbenelement (10) überträgt, um das Kolbenelement (10) nach rechts oder nach links zu drehen, wobei bei einer Betätigung des Betätigungselements (31) in eine zweite Richtung der zweite Bowdenzug (33) einen Zug auf das Kolbenelement (10) überträgt, um das Kolbenelement (10) in die entsprechende andere Richtung nach links oder rechts zu drehen.

12. Fahrzeugsitz (1) nach Anspruch 10 oder 11,
**dadurch gekennzeichnet, dass**
das Betätigungselement (31) eine Rückstellfeder (34) umfasst, um das Betätigungselement (31) nach einer Betätigung automatisch in eine Null-Stellung (35) zurückzustellen.

13. Verfahren zum Betreiben des Fahrzeugsitzes (1) mit einer Restfederwegsteuerung (2) nach einem der Ansprüche 1 bis 12, umfassend die Verfahrensschritte:
a) Betätigung der Restfederwegsteuerung (2);
b) abhängig von einer Stellung des Kolbenelements (10) zu dem Stangenelement (11);
b1) Ausfahren der Restfederwegsteuerung (2) aus einem unteren Restfederwegbereich (28) in einen Normalbereich (30);
b2) Ausfahren der Restfederwegsteuerung (2) aus einem oberen Restfederwegbereich (29) in einen Normalbereich (30);
b3) Einstellung einer Höhe des Fahrzeugsitzes (1) in dem Normalbereich (30).

## Claims

1. Vehicle seat (1) having a residual spring travel controller (2) and an air spring (3), the residual spring travel controller (2) and the air spring (3) each having a first end (6) that is connected to a first connecting link (4) of the vehicle seat (1) and each having a second end (7) that is connected to a second connecting link (5) of the vehicle seat (1), and the residual spring travel controller (2) comprising a piston element (10) that is connected to the first end (6) of the residual spring travel controller (2) and a rod element (11) that is connected to the second end (7) of the residual spring travel controller (2),
wherein the piston element (10) can be brought into contact with a valve element (12) or a switch element (13) by means of a rotary and sliding movement with respect to the rod element (11) to adjust an amount of air of the air spring (3),
**characterised in that**
the piston element (10) comprises a first functional region (14) and a second functional region (15), it being possible to bring the first functional region (14) into contact with the switch element (13) and the second functional region (15) into contact with the valve element (12) as a function of an angular position and a longitudinal position of the piston element (10) relative to the rod element (11).

2. Vehicle seat (1) according to claim 1,
**characterised in that**
the switch element (13) is designed and provided for actuating an air conveying unit for conveying air into the air spring (3) and the valve element (12) is designed and provided to allow air to escape from the air spring (3).

3. Vehicle seat (1) according to any of the preceding claims,
**characterised in that**
a first latching pawl (17) and a second latching pawl (18) are arranged on the second end (7) of the residual spring travel controller (2), it being possible to lock the first functional region (14) by means of the first latching pawl (17) and the second functional region (15) by means of the second latching pawl (18) with respect to a rotation of the piston element (10).

4. Vehicle seat (1) according to claim 3,
**characterised in that**
the first functional region (14) comprises a first functional region portion (19) and a second functional region portion (20), it being possible to bring the first functional region portion (19) into contact with the switch element (13) and the second functional region portion (20) into contact with the second latching pawl (18).

5. Vehicle seat (1) according to claim 3,
**characterised in that**
the second functional region (15) has a first functional region portion (21) and a second functional region portion (22), it being possible to bring the first functional region portion (21) into contact with the valve element (12) and the second functional region portion (22) into contact with the first latching pawl (17).

6. Vehicle seat (1) according to claim 3,
**characterised in that**
the first latching pawl (17) and the second latching pawl (18) are spaced apart from each other at a distance (84) in an extension direction (ER) of the rod element (11).

7. Vehicle seat (1) according to claim 4,
**characterised in that**
the first functional region portion (19) of the first functional region (14) has a first length (24) and the second functional region portion (20) of the first functional region (14) has a second length (25) as seen in an extension direction (ER) of the piston element (10).

8. Vehicle seat (1) according to claim 5,
**characterised in that**
the first functional region portion (21) of the second functional region (15) has a first length (26) and the second functional region portion (22) of the second functional region (15) has a second length (27) as seen in an extension direction (ER) of the piston element (10).

9. Vehicle seat (1) according to any of the preceding claims,
**characterised in that**
a lower residual spring travel range (28) and an upper residual spring travel range (29) as well as a normal range (30) of the vehicle seat (1) arranged between the lower (28) and the upper residual spring travel range (29) are provided, the first functional region (14) being in contact with the switch element (13) by means of a rotation of the piston element (10) when the vehicle seat (1) is in the lower residual spring travel range (28), and it being possible to bring the second functional region (15) into contact with the valve element (12) by means of a rotation of the piston element (10) when the vehicle seat (1) is in the upper residual spring travel range (29).

10. Vehicle seat (1) according to any of the preceding claims,
**characterised in that**
an actuating element (31) is provided for actuating the residual spring travel controller (2), a first Bowden cable (32) and a second Bowden cable (33) being connected to the actuating element (31) on the one hand and to the piston element (10) on the other hand.

11. Vehicle seat (1) according to claim 10,
**characterised in that**
upon actuation of the actuating element (31) in a first direction, the first Bowden cable (32) transmits a pull to the piston element (10) to rotate the piston element (10) to the right or to the left, the second Bowden cable (33) transmitting a pull to the piston element (10) to rotate the piston element (10) to the left or to the right in the corresponding other direction upon actuation of the actuating element (31) in a second direction.

12. Vehicle seat (1) according to claim 10 or claim 11,
**characterised in that**
the actuating element (31) comprises a return spring (34) for automatically returning the actuating element (31) to a zero position (35) following an actuation.

13. Method for operating the vehicle seat (1) having a residual spring travel controller (2) according to any of claims 1 to 12, comprising the following method steps:
a) actuating the residual spring travel controller (2);
b) depending on a position of the piston element (10) relative to the rod element (11);
b1) extending the residual spring travel controller (2) from a lower residual spring travel range (28) to a normal range (30);
b2) extending the residual spring travel controller (2) from an upper residual spring travel range (29) to a normal range (30);
b3) setting a height of the vehicle seat (1) in the normal range (30).

## Revendications

1. Siège de véhicule (1) ayant une commande de course de ressort résiduelle (2) et un ressort pneumatique (3), la commande de course de ressort résiduelle (2) et le ressort pneumatique (3) présentant chacun une première extrémité (6), laquelle est reliée à un premier bras oscillant de liaison (4) du siège de véhicule (1), et chacun une seconde extrémité (7), laquelle est reliée à un second bras oscillant de liaison (5) du siège de véhicule (1), et la commande de course de ressort résiduelle (2) comporte un élément piston (10), lequel est relié à la première extrémité (6) de la commande de course de ressort résiduelle (2), et un élément tige (11), lequel est relié à la seconde extrémité (7) de la commande de course de ressort résiduelle (2), l'élément piston (10) pouvant être amené en contact avec un élément soupape (12) ou un élément commutateur (13) au moyen d'un mouvement rotatif et coulissant par rapport à l'élément tige (11), afin de régler une quantité d'air du ressort pneumatique (3),
**caractérisé par le fait que**
l'élément piston (10) comporte une première zone fonctionnelle (14) et une seconde zone fonctionnelle (15), la première zone fonctionnelle (14) pouvant être amenée en contact avec l'élément commutateur (13) et la deuxième zone fonctionnelle (15) pouvant être amenée en contact avec l'élément soupape (12) en fonction d'une position de rotation et d'une position longitudinale de l'élément piston (10) par rapport à l'élément tige (11).

2. Siège de véhicule (1) selon la revendication 1,
**caractérisé par le fait que**
l'élément commutateur (13) est conçu et prévu pour la commande d'une unité de transport d'air pour le transport d'air dans le ressort pneumatique (3), et l'élément soupape (12) est conçu et prévu pour permettre à l'air de s'échapper du ressort pneumatique (3).

3. Siège de véhicule (1) selon l'une des revendications précédentes,
**caractérisé par le fait qu'**
un premier cliquet de verrouillage (17) et un second cliquet de verrouillage (18) sont disposés à la seconde extrémité (7) de la commande de course de ressort résiduelle (2), la première zone fonctionnelle (14) étant verrouillable au moyen du premier cliquet de verrouillage (17) et la seconde zone fonctionnelle (15) étant verrouillable au moyen du second cliquet de verrouillage (18) vis-à-vis d'une rotation de l'élément piston (10).

4. Siège de véhicule (1) selon la revendication 3,
**caractérisé par le fait que**
la première zone fonctionnelle (14) comporte une première partie de zone fonctionnelle (19) et une seconde partie de zone fonctionnelle (20), la première partie de zone fonctionnelle (19) pouvant être amenée en contact avec l'élément commutateur (13) et la seconde partie de zone fonctionnelle (20) pouvant être amenée en contact avec le second cliquet de verrouillage (18).

5. Siège de véhicule (1) selon la revendication 3,
**caractérisé par le fait que**
la seconde zone fonctionnelle (15) présente une première partie de zone fonctionnelle (21) et une seconde partie de zone fonctionnelle (22), la première partie de zone fonctionnelle (21) pouvant être amenée en contact avec l'élément soupape (12) et la seconde partie de zone fonctionnelle (22) pouvant être amenée en contact avec le premier cliquet de verrouillage (17).

6. Siège de véhicule (1) selon la revendication 3,
**caractérisé par le fait que**
le premier cliquet de verrouillage (17) et le second cliquet de verrouillage (18) sont espacés l'un de l'autre d'une distance (84) dans une direction d'extension (ER) de l'élément tige (11).

7. Siège de véhicule (1) selon la revendication 4,
**caractérisé par le fait que**
la première partie de zone fonctionnelle (19) de la première zone fonctionnelle (14) présente une première longueur (24) et la seconde partie de zone fonctionnelle (20) de la première zone fonctionnelle (14) présente une seconde longueur (25) vu dans une direction d'extension (ER) de l'élément piston (10).

8. Siège de véhicule (1) selon la revendication 5,
**caractérisé par le fait que**
la première partie de zone fonctionnelle (21) de la seconde zone fonctionnelle (15) présente une première longueur (26) et la seconde partie de zone fonctionnelle (22) de la seconde zone fonctionnelle (15) présente une seconde longueur (27) vu dans une direction d'extension (ER) de l'élément piston (10).

9. Siège de véhicule (1) selon l'une des revendications précédentes,
**caractérisé par le fait qu'**
une zone de course de ressort résiduelle inférieure (28) et une zone de course de ressort résiduelle supérieure (29) ainsi qu'une zone normale (30) du siège de véhicule (1) disposée entre la zone de course de ressort résiduelle inférieure (28) et la zone de course de ressort résiduelle supérieure (29) sont prévues, où, lorsque le siège de véhicule (1) se trouve dans la zone de course de ressort résiduelle inférieure (28), la première zone fonctionnelle (14) est en contact avec l'élément commutateur (13) au moyen d'une rotation de l'élément piston (10), et , lorsque le siège du véhicule (1) se trouve dans la zone de course de ressort résiduelle supérieure (29), la seconde zone fonctionnelle (15) peut être amenée en contact avec l'élément soupape (12) au moyen d'une rotation de l'élément piston (10).

10. Siège de véhicule (1) selon l'une des revendications précédentes,
**caractérisé par le fait qu'**
un élément d'actionnement (31) est prévu pour l'actionnement de la commande de course de ressort résiduelle (2), un premier câble Bowden (32) et un second câble Bowden (33) étant reliés à l'élément d'actionnement (31), d'une part, et à l'élément piston (10), d'autre part.

11. Siège de véhicule (1) selon la revendication 10,
**caractérisé par le fait que**
lors d'un actionnement de l'élément d'actionnement (31) dans une première direction, le premier câble Bowden (32) transmet une traction à l'élément piston (10) afin de faire tourner l'élément piston (10) vers la droite ou vers la gauche, où, lors d'un actionnement de l'élément d'actionnement (31) dans une seconde direction, le second câble Bowden (33) transmet une traction à l'élément piston (10) afin de faire tourner l'élément piston (10) vers la gauche ou vers la droite dans l'autre direction correspondante.

12. Siège de véhicule (1) selon l'une des revendications 10 ou 11,
**caractérisé par le fait que**
l'élément d'actionnement (31) comporte un ressort de rappel (34) pour ramener automatiquement l'élément d'actionnement (31) à une position zéro (35) après un actionnement.

13. Procédé pour faire fonctionner le siège de véhicule (1) ayant une commande de course de ressort résiduelle (2) selon l'une des revendications 1 à 12, comportant les étapes de procédé :
a) actionnement de la commande de course de ressort résiduelle (2) ;
b) en fonction d'une position de l'élément piston (10) par rapport à l'élément tige (11) ;
b1) sortie de la commande de course de ressort résiduelle (2) d'une zone de course de ressort résiduelle inférieure (28) dans une plage normale (30) ;
b2) sortie de la commande de course de ressort résiduelle (2) d'une zone de course de ressort résiduelle supérieure (29) dans une plage normale (30) ;
b3) réglage d'une hauteur du siège du véhicule (1) dans la plage normale (30).
